# EUROPEAN PATENT APPLICATION

(11) **EP 4 807 642 A1**
(43) Date of publication of application: **16.09.2026**
(21) Application number: 26161261.8
(22) Date of filing: 27.02.2026
(51) Int. Cl.: G06Q 10/06, G06Q 50/06, G01C 9/06, G01M 3/28, G08B 21/10, F24D 18/00

(54) **DETECTING POTENTIAL BREAKS OR LEAKS DUE TO DISRUPTIVE EVENTS**

(30) Priority: 12.03.2025 US 202519078067
(71) Applicant: Itron, Inc., Liberty Lake, WA 99019 (US)
(72) Inventor: KANN, James Lee, Liberty Lake, 99019 (US); DRISCOLL, Timothy James, Liberty Lake, 99019 (US)
(74) Representative: Finlayson, Scott Henry

(57) **Abstract**

In various embodiments, techniques for detecting potential breaks or leaks due to disruptive events include detecting, by a computing device, an event occurring at a location proximate a metering device, the event corresponding to an earthquake or a severe weather event; receiving, by the computing device, first consumption data for a commodity, the first consumption data being collected by the metering device after the event; comparing the first consumption data with second consumption data for the commodity, the second consumption data being collected by the metering device before the event; and in response to the comparing, performing, by the computing device, a remedial action.

## Description

### BACKGROUND

### Field of the Various Embodiments

The various embodiments relate generally to the detection of disruption in utility distribution systems, and more specifically, to detecting potential breaks or leaks due to disruptive events, such as earthquakes or severe weather events.

### Description of the Related Art

Utility distribution networks for commodities, such as water, gas, heat, electricity, and/or the like are critical infrastructures that rely on extensive pipelines or other infrastructure spanning residential, commercial, and industrial regions. Disruption of commodity distribution in these networks, such as due to pipe breaks or leaks, can pose significant safety risks, cause substantial property damage, and lead to waste of the commodities being distributed. Disruptive events like earthquakes or severe weather conditions like tornados can significantly increase the likelihood of such damage.

### BRIEF DESCRIPTION OF THE DRAWINGS

So that the manner in which the features of the various embodiments can be understood in detail, a description of the inventive concepts may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
FIG. 1 illustrates a flow diagram for detecting unintended consumption of a utility commodity at a location following a disruptive event and performing a remedial action, according to various embodiments;
FIG. 2A is a block diagram illustrating a system, according to various embodiments;
FIG. 2B is a block diagram illustrating another system, according to various embodiments;
FIG. 3A illustrates an example of consumption data for a utility commodity before and after a disruptive event, according to various embodiments;
FIG. 3B illustrates another example of consumption data for a utility commodity before and after a disruptive event, according to various embodiments;
FIG. 4 is a flow diagram illustrating method steps of a method for analyzing and detecting atypical consumption of a utility commodity and performing a remedial action, according to various embodiments;
FIG. 5 is a flow diagram illustrating method steps performed by a metering module, according to various embodiments; and
FIG. 6 illustrates a network system, configured to implement one or more aspects of the various embodiments.

### DETAILED DESCRIPTION

Natural disasters including earthquakes, tornadoes, and other disruptive events pose significant risks to utility infrastructure, including water pipelines, gas pipelines, heating systems, or electricity wiring. Currently, utility companies rely on manual inspection procedures in areas affected by disruptive events to assess potential damage to pipelines and/or wiring. In many cases, damage assessment is delayed until leaks become visible or interruptions in service are reported, which can result in hazards, inefficiencies, prolonged service disruptions, and waste of the commodities being distributed.

Smart utility meters have improved the monitoring and management of utility consumption. These meters electronically record consumption data such as water, gas, heat, or electricity usage and transmit that consumption data to backend computing systems of utility providers for billing, analytics, and supply management. Additionally, many smart meters are now equipped with sensors (e.g., accelerometers, tilt sensors) that detect physical disturbances or tampering attempts.

One drawback of current utility monitoring systems is that they do not seamlessly integrate real-time event information into existing monitoring processes. As a result, when disruptive events, such as earthquakes and/or severe weather occur, utilities often rely on customer reports or manual inspections to detect potential pipe breaks or other infrastructure issues. This reactive approach can delay remedial actions, increase the likelihood of extended service interruptions, and ultimately elevate both financial costs and public safety risks.

At least one technical advantage of the disclosed techniques is that, with the disclosed techniques, potential losses or hazards in commodity distribution systems due to disruptive events, such as earthquakes and severe weather can be rapidly and automatically detected. In addition, the disclosed techniques eliminate the need for onsite inspection of the commodity distribution system in order to make a preliminary assessment of whether a break or leak is present in a commodity distribution system. This mitigates the wasting of the commodity and reduces the risks due to a break or leak in the commodity distribution system.

### Detecting Break, Leaks, and Infrastructure Failures Associated with Disruptive Events

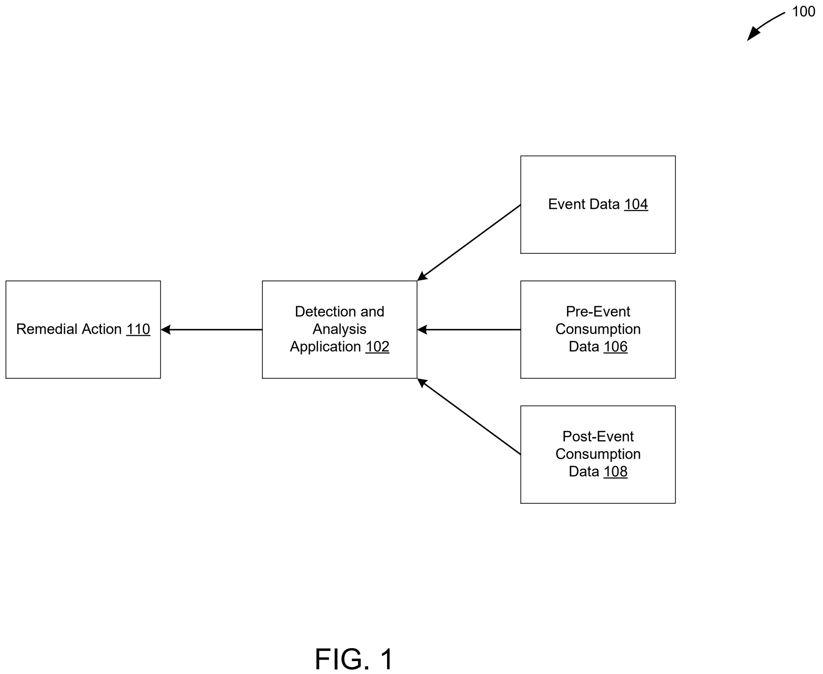

FIG. 1 is a flow diagram illustrating an example process 100 for detecting unintended consumption of a utility commodity at a location following a disruptive event and performing a remedial action, in accordance with various embodiments of the present disclosure. As shown in FIG. 1, process 100 includes, without limitation, a detection and analysis application 102, event data 104, pre-event consumption data 106, post-event consumption data 108, and a remedial action 110.

In operation, detection and analysis application 102 uses event data 104 to detect when a disruptive event has occurred. Detection and analysis application 102 can be located in a metering device (e.g., a utility meter) capturing consumption data or remotely in a back office server. In response to detecting the disruptive event, detection and analysis application 102 analyzes the pre-event consumption data 106 and the post-event consumption data 108 to determine whether a leak or break in a commodity distribution system has occurred. When a leak or break is suspected, remedial action 110 is performed.

The event data 104 represents data obtained from one or more external or internal sources indicative of a disruptive event such as an earthquake, hurricane, tornado, or other severe weather disturbance. For example, the event data 104 can be retrieved from online feeds or monitoring services including, but not limited to, the United States Geological Survey (USGS) Earthquake Hazards Program API or the National Weather Service (NWS) API. Alternatively, the event data 104 can be derived from sensors in a metering device (e.g., accelerometers, tilt sensors) that detect seismic activity directly at the location and/or damage or movement to the metering device due to the disruptive event. For example, a utility pole or structure to which the metering device is mounted could bend, fall, or suffer other damage that moves the metering device.

Following detection of the event, detection and analysis application 102 acquires and analyzes pre-event consumption data 106 and post-event consumption data 108 of the utility commodity at the location. Pre-event consumption data 106 corresponds to commodity consumption prior to the disruptive event and establishes a profile of commodity consumption prior to the event. Post-event consumption data 108 corresponds to commodity consumption after the event occurs. In some cases, the sampling rate for collecting the post-event consumption data 108 is increased for a period of time after the disruptive event occurs. By comparing the pre-event consumption data 106 and the post-event consumption data 108, detection and analysis application 102 can determine whether there has been a change in consumption due to the disruptive event that indicates possible leakage, a pipe break, an electrical short, and/or other infrastructure failure. Such deviations can be determined by using the pre-event consumption data 106 to determine a threshold consumption value, disaggregated usage patterns, or time-of-use profiles that consider daily, weekly, or seasonal usage variations. Post-event consumption data 108 can then be compared with the threshold consumption value, disaggregated usage pattern, and/or time-of-use profiles to determine a possible leak, break, or other infrastructure failure.

In some embodiments, detection and analysis application 102 evaluates the pre-event consumption data 106 to determine a threshold consumption value based on a steady-state consumption rate. For example, detection and analysis application 102 can determine the steady-state consumption rate based on an average consumption value over a defined period of time (e.g., five seconds, ten seconds, thirty seconds, one minute, five minutes, etc.) prior to the disruptive event. The threshold consumption value can then be set at a fixed percentage (e.g., five percent, ten percent, twenty percent, etc.) above the average consumption value. Additionally, the threshold consumption value could also be adjusted based on a type of location where the pre-event consumption data 106 is being captured and/or a history of consumption at the location in the distribution infrastructure downstream of the location. Detection and analysis application 102 then evaluates the post-event consumption data 108 to determine a post-event steady state consumption rate (e.g., an average consumption rate) over a defined period of time (e.g., five seconds, ten seconds, thirty seconds, one minute, five minutes, etc.) after the disruptive event. When the post-event consumption rate is above the threshold consumption value, this indicates an increase in consumption that could be due to a break, leak, and/or other infrastructure failure. When detection and analysis application 102 suspects a possible leak, break and/or other infrastructure failure, detection and analysis application 102 performs the remedial action 110. For example, if water consumption at the location or downstream of the location suddenly increases by more than twenty percent right after a disruptive event, detection and analysis application 102 will detect that the consumption likely indicates a potential break or leak in a water pipe due to the disruptive event and performs the remedial action 110.

In some embodiments, detection and analysis application 102 compares the pre-event consumption data 106 and the post-event consumption data 108 based on disaggregated consumption patterns. Disaggregated consumption patterns break down commodity consumption patterns over time. The disaggregated consumption patterns associate different amounts of commodity consumption with particular activities or consumption by particular devices. The disaggregated consumption can then be reaggregated to determine a total amount of consumption. For example, water consumption can be separated (e.g., disaggregated) into amounts of consumption by dishwashers, washing machines, restrooms, and/or the like. Gas consumption can be separated into amounts of consumption by water heaters, heating systems, gas ranges, and/or the like. Electricity consumption can be separated into amounts of consumption by lighting, air conditioning systems, and/or the like. By comparing the disaggregated consumption patterns in the pre-event consumption data 106 to disaggregated consumption patterns in the post-event consumption data 108, detection and analysis application 102 can identify changes in consumption that can indicate a leak, break and/or infrastructure failure associated with a specific consumption device or activity. For example, if one water heater consumes more gas than expected based on the pre-event disaggregated consumption associated with the water heater after a disruptive event, detection and analysis application 102 indicates potential leak or break is a gas line associated with the water heater and performs the remedial action 110.

In some embodiments, detection and analysis application 102 evaluates time-of-use profiles from pre-event consumption data 106 to determine typical commodity consumption during defined periods of time (e.g., hourly, daily, weekly, or seasonally) prior to a disruptive event. The time-of-use profiles represent trends in commodity consumption, such as increased electricity consumption in the evening when residents are typically at home, or increased electricity consumption during hot summer afternoons due to operation of air conditioners. Once the time-of-use profiles are generated, detection and analysis application 102 compares the post-event consumption data 108 to the generated time-of-use profiles to identify deviations. For example, if a sudden spike in consumption is detected during a time typically characterized by low demand such as gas consumption in early morning hours, this deviation represents atypical consumption. Such atypical consumption can indicate a possible leak, break and/or other infrastructure failure. When atypical consumption is detected, detection and analysis application 102 performs the remedial action 110.

When the comparison of the post-event consumption data 108 to the pre-event consumption data 106 indicates that the post-event consumption data 108 is inconsistent with expected patterns in the pre-event consumption data 106 (e.g., an increase or change in consumption indicative of a break, leak, and/or infrastructure failure), detection and analysis application 102 performs remedial action 110. Remedial action 110 can include, without limitation, notifying a utility service or a property owner of a potential leak or break, scheduling a manual inspection by utility personnel, recommending or performing a mitigation measure (e.g., shutting off the commodity flow), and/or the like.

### Metering Device

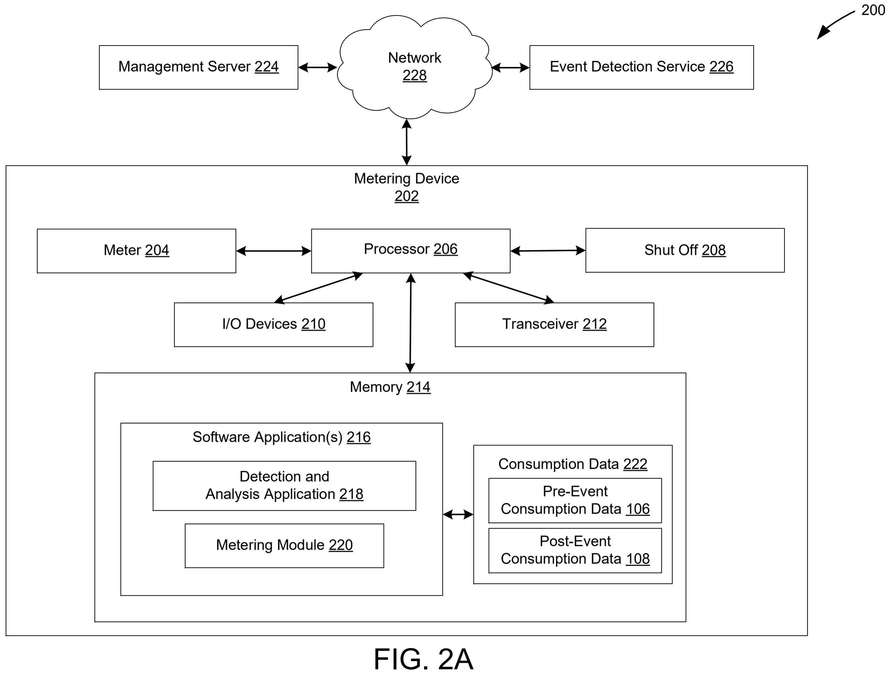

FIG. 2A is a block diagram illustrating a system 200, according to various embodiments. In some embodiments, system 200 is used to implement any of the detection and analysis application 102 of FIG. 1. As shown, system 200 includes, without limitation, a metering device 202, a management server 224, and an event detection service 226, each of which are connected via a communications network 228. Metering device 202 includes, without limitation, a meter 204, a processor 206, a shut off 208, I/O devices 210, a transceiver 212, and memory 214, coupled together. Memory 214 stores, without limitation, one or more software applications 216 and consumption data 222. The one or more software applications 216 include, without limitation, a detection and analysis application 218 and a metering module 220. Consumption data 222 includes, without limitation, the pre-event consumption data 106, and the post-even consumption data 108.

Metering device 202 is representative of a smart metering device used to monitor consumption of a commodity as collected by meter 204, report the consumption of the commodity to management server 224 via network 228, and/or the like. For example, metering device 202 can be a metering device for one or more of water, gas, heat, electricity, and/or the like. Metering device 202 is also responsible for performing any of the functionality of detection and analysis application 102.

Meter 204 monitors the consumption of a commodity (e.g., water, gas, heat, electricity) on behalf of metering device 202. Meter 204 couples the commodity delivery infrastructure (not shown) of a utility to one or more commodity consumption device (not shown) or a downstream portion of the commodity delivery infrastructure. Meter 204 further used one or more sensor devices (not shown) for measuring a rate or amount of consumption (or usage) of the commodity as the commodity is consumed by the commodity consumption devices downstream of meter 204. Meter 204 then reports the consumption to metering module 220. Meter 204 can further receive commands from metering module 220, such as a command to change a sampling rate at which the consumption of the commodity is measured and reported. In some examples, the command to change the sampling rate could indicate a prescribed amount of time during which the sampling rate should be changed.

Processor 206 coordinates operations of metering device 202. In various embodiments, processor 206 includes any hardware configured to process data and execute software applications. The processor 206 can be any technically feasible processing device configured to process data and execute program instructions. For example, processor 206 could include one or more central processing units (CPUs), digital signal processors (DSPs), graphics processing units (GPUs), application-specific integrated circuits (ASICs), field-programmable gate arrays (FPGAs), microprocessors, microcontrollers, other types of processing units, and/or a combination of different processing units. Processor 206 can include a real-time clock (RTC) (not shown) according to which processor 206 maintains an estimate of the current time. The estimate of the current time can be expressed in Universal Coordinated Time (UTC), although any other standard of time measurement can also be used.

Shut off 208 within metering device 202 is used by detection and analysis application 218 and/or metering module 220 to shut off the supply of the commodity from the commodity delivery infrastructure to the one or more commodity consumption devices and/or the commodity distribution infrastructure downstream of meter 204. Depending on the type of the commodity, shut off 208 can include one or more valves (e.g., one for each pipe between metering device 202 and the commodity consumption devices), one or more circuit breakers, switches, relays, and/or the like to control whether electricity is provided to each of the circuits feeding electricity to the commodity consumption devices. Based on a command from detection and analysis application 218 and/or metering module 220, shut off 208 can disconnect the flow of the commodity, such as part of remedial action 110. In some embodiments, shut off 208 can be implemented externally to metering device 202 and incorporated within a separate device, such as a separate shut-off valve (not shown). In such embodiments, remedial action 110 can include receiving one or more commands (e.g., a wired or wireless control signal or message) by the separate shut-off valve from detection and analysis application 218 and/or metering module 220, which, in response, executes disconnection of the commodity flow.

I/O devices 210 include devices configured to receive input, devices configured to provide output, and devices configured to both receive input and provide output. For example, I/O devices 210 can include a display device to show information about the consumption of the commodity, the activity of detection and analysis application 218 and/or metering module 220, and/or the like. I/O devices 210 can further include one or more user input devices (e.g., buttons, knobs, keys, etc.) to control and/or configure the operation of meter 204, detection and analysis application 218, and/or metering module 220. In some embodiments, I/O devices 210 further include one or more sensors for assisting in the detection of disruptive events. The sensors can include accelerometers to detect vibrations, or sudden movements that can indicate a disruptive event near (e.g., proximate or within the vicinity of) the metering device 202. Tilt sensors can also be included to monitor changes in the orientation of the metering device along three axes (e.g., an x-axis, a y-axis, and a z-axis). Readings from accelerometers and/or the tilt sensors can be used by detection and analysis application 218 to determine whether a disruptive event has occurred.

Transceiver 212 is configured to transmit and/or receive event data 104 and/or other messages to and from management server 224, event detection service 226, and/or other devices using network 228. For example, transceiver 212 transmits one or more messages that include metrology data indicative of commodity consumption measured by meter 204 and recorded by metering module 220 to management server 224. Transceiver 212 also transmits one or more messages from detection and analysis application 218 to event detection service 226 to request information about potential disruptive events. Transceiver 212 also receives any responses and/or alerts from event detection service 226 for delivery to detection and analysis application 218. Transceiver 212 further transmits consumption data 222 to management server 224. In addition, transceiver 212 transmits one or more messages associated with the remedial action 110 to management server 224.

Memory 214 can include a random-access memory (RAM) module, a flash memory unit, or any other type of memory unit or combination thereof. The processor 206 is configured to read data from and write data to memory 214. In various embodiments, memory 214 includes non-volatile memory, such as optical drives, magnetic drives, flash drives, or other storage. In some embodiments, separate data stores, such as an external data stores (not shown) included in a network ("cloud storage") can supplement the memory 214. The software applications 216 including detection and analysis application 218 and/or metering module 220 within memory 214 can be executed by processor 206 to implement the overall functionality of metering device 202. Memory 214 can further store data such as pre-event consumption data 106 and post-event consumption data 108.

Detection and analysis application 218 is responsible for working with metering module 220 to detect when a disruptive event occurs, compare pre-event consumption data 106 and post-event consumption data 108, and perform one or more remedial actions 110. In some examples, detection and analysis application 218 performs some or all of the functionality as detection and analysis application 102.

In some embodiments, detection and analysis application 218 detects whether a disruptive event has occurred by transmitting, via transceiver 212 and network 228, one or more requests to event detection service 226 to request information about potential disruptive events at or near (e.g., within a defined distance, such as one kilometer, five kilometers, ten kilometers, etc.) metering device 202 and/or near an area to which metering device 202 supplies a commodity. The requested information can include a severity or magnitude of the potential disruptive events (e.g., an earthquake magnitude above a certain level, a wind speed above a certain level, etc.). For example, detection and analysis application 218 can send a request to the USGS Earthquake Hazards Program API about recent earthquakes. Additionally or alternatively, detection and analysis application 218 can send a request to the NWS API for information about recent severe weather. In some embodiments, detection and analysis application 218 sends a request to event detection service 226 to automatically send alerts to detection and analysis application 218 about potential disruptive events that occur within at or near of metering device 202. In some embodiments, detection and analysis application 218 uses data from one or more sensors included in I/O devices 210 (e.g., accelerometers, tilt sensors) to assist with determining whether a disruptive event has occurred. For example, detection and analysis application 218 can set a predefined threshold for accelerometer readings to detect abrupt movements typically associated with seismic activity. When the accelerometer output exceeds a specific threshold, such as a certain magnitude of acceleration (e.g., 0.5g or 1.0g over a short period, detection and analysis application 218 detects a potential disruptive event. In another example, detection and analysis application 218 can monitor tilt sensors for a change in orientation over a defined time intervals. For example, detection and analysis application 218 can record the output of tilt sensors periodically (e.g., every thirty seconds, every sixty seconds, etc.) and calculate an average in the tilt angle. If the average change in tilt exceeds a certain threshold (e.g., twenty degrees average deviation over thirty seconds), detection and analysis application 218 detects a potential disruptive event.

In some embodiments, when detection and analysis application 218 detects a disruptive event, detection and analysis application 218 sends a command to metering module 220 to increase a sampling rate used by meter 204 to collect the post-event consumption data 108. This adjustment enables post-event consumption data 108 to be collected more frequently, so as to allow detection and analysis application 218 to identify any atypical consumption more quickly after the detection of a disruptive event. In some examples, the command to increase the sampling rate indicates a limited period of time during which increased sampling is desired. Detection and analysis application 218 then compares pre-event consumption data 106 and post-event consumption data 108, to determine whether there has been a change in the consumption data that might be due to the disruptive event.

In some embodiments, detection and analysis application 218 evaluates the pre-event consumption data 106 to determine a threshold consumption value based on a steady-state consumption rate. For example, detection and analysis application 218 can determine the steady-state consumption rate based on an average consumption value over a defined period of time (e.g., five seconds, ten seconds, thirty seconds, one minute, five minutes, etc.) prior to the disruptive event. The threshold consumption value can then be set at a fixed percentage (e.g., five percent, ten percent, twenty percent, etc.) or a set amount above the average consumption value. Additionally, the threshold consumption value could also be adjusted based on a type of location where the pre-event consumption data 106 is being captured, a size of the commodity distribution infrastructure supplied by metering device 202, and/or a history of consumption by metering device 202. Detection and analysis application 218 then evaluates the post-event consumption data 108 to determine a post-event steady state consumption rate (e.g., an average consumption rate) over a defined period of time (e.g., five seconds, ten seconds, thirty seconds, one minute, five minutes, etc.) after the disruptive event. When the post-event consumption rate is above the threshold consumption value, this indicates an increase in consumption that could be due to a break, leak, and/or other infrastructure failure. When detection and analysis application 218 suspects a possible leak, break and/or other infrastructure failure, detection and analysis application 218 performs the remedial action 110.

In some embodiments, detection and analysis application 218 compares the pre-event consumption data 106 and the post-event consumption data 108 based on disaggregated consumption patterns. Disaggregated consumption patterns break down commodity consumption patterns over time. The disaggregated consumption patterns associate different amounts of commodity consumption with particular activities or consumption by particular devices. The disaggregated consumption can then be reaggregated to determine a total amount of consumption. For example, water consumption can be separated (e.g., disaggregated) into amounts of consumption by dishwashers, washing machines, restrooms, and/or the like. Gas consumption can be separated into amounts of consumption by water heaters, heating systems, gas ranges, and/or the like. Electricity consumption can be separated into consumption amounts of consumption by lighting, air conditioning systems, and/or the like. By comparing the disaggregated consumption patterns in the pre-event consumption data 106 to disaggregated consumption patterns in the post-event consumption data 108, detection and analysis application 218 can identify changes in consumption that can indicate a leak, break and/or infrastructure failure associated with a specific consumption device or activity. For example, if one water heater consumes more gas than expected based on the pre-event disaggregated consumption associated with the water heater after a disruptive event, detection and analysis application 218 indicates potential leak or break is a gas line associated with the water heater and performs the remedial action 110.

In some embodiments, detection and analysis application 218 evaluates time-of-use profiles from pre-event consumption data 106 to determine typical commodity consumption during defined periods of time (e.g., hourly, daily, weekly, or seasonally) prior to a disruptive event. The time-of-use profiles represent trends in commodity consumption, such as increased electricity consumption in the evening when residents are typically at home, or increased electricity consumption during hot summer afternoons due to operation of air conditioners. Once the time-of-use profiles are generated, detection and analysis application 218 compares the post-event consumption data 108 to the generated time-of-use profiles to identify deviations. For example, if a sudden increase in consumption is detected during a time typically characterized by low demand such as gas consumption in early morning hours, this deviation represents atypical consumption. Such atypical consumption can indicate possible leak, break and/or other infrastructure failure, such as when the atypical consumption occurs after a disruptive event. When atypical consumption is detected, detection and analysis application 218 performs the remedial action 110.

Detection and analysis application 218 performs remedial action 110 after identification of atypical consumption detected using any of the techniques described above including, without limitation, the use of a threshold consumption value, disaggregated consumption patterns, and/or time-of-use profiles. Remedial action 110 can include sending a notification, via transceiver 212, to management server 224 so that, for example, a technician can be dispatched for an on-site inspection or notifying the property owner. Another remedial action can include sending a command to shut off 208 to stop flow of the whole commodity or just to the impacted device or circuit if disaggregated patterns are used to detect the atypical consumption. For example, if atypical water consumption is identified by threshold consumption value or time-of-use profiles, shut off 208 shuts off flow of water from the main. If atypical water consumption is identified by disaggregated consumption patterns shut off 208 module shuts off a pipe associated with a particular device suspected of having a break or leak. In some embodiments, detection and analysis application 218 can initiate remedial action 110 by transmitting one or more commands (e.g., a wired or wireless control signal or message) to a separate shut-off valve (not shown) external to metering device 202. Upon receiving the command, the separate shut-off valve executes disconnection of the commodity flow.

Metering module 220 is responsible for controlling the operation of meter 204. This includes sending commands to meter 204 to modify the operation of meter 204 based on various conditions or commands received from detection and analysis application 218 and/or management server 224. For example, metering module 220 can adjust the sampling rate of meter 204 based on a received command.

Metering module 220 can provide consumption data 222 to detection and analysis application 218 and/or management server 224 from meter 204 periodically or upon request from detection and analysis application 218 and/or management server 224. In addition, metering module 220 receives consumption data from meter 204 and stores the consumption data in consumption data 222.

Consumption data 222 includes recorded consumption data of a commodity (e.g., water, gas, heat, or electricity) generated by meter 204. Consumption data 222 includes pre-event consumption data 106 and post-event consumption data 108.

Pre-event consumption data 106 includes amounts of a commodity consumed before a disruptive event occurs. Pre-event consumption data 106 can include disaggregated consumption data, which breaks down consumption data by particular devices or particular activities (e.g., water heaters, dishwashers, lighting systems), as well as time-of-use profiles, which reflect typical consumption of a commodity trends over defined periods (e.g., hourly, daily, or seasonally). Pre-event consumption data 106 establishes a baseline of commodity consumption that can be used to determine when post-event consumption data 108 might be atypical.

Post-event consumption data 108 includes amounts of a commodity consumed after a disruptive event occurs. Post-event consumption data 108 records normal consumption as well atypical consumption data caused by potential leaks, breaks, or other infrastructure failures. In some examples, post-event consumption data 108 is recorded at a higher sampling rate than pre-event consumption data 106. Post-event consumption data 108 can be compared with pre-event consumption data 106 to determine when atypical consumption of a commodity is occurring.

Management server 224 can represent a computing device (e.g., a rack server, a blade server, a tower server, etc.). Management server 224 can receive metrology data from metering device 202, including consumption data 222 generated by meter 204. Management server 224 stores consumption data 222 for analysis or reporting. For example, management server 224 can store consumption data 222 in a database for later analysis. In some embodiments, management server 224 performs data analytics and/or pattern recognition on consumption data 222 to determine patterns of consumption, disaggregated consumption patterns, identification of patterns that are indicative of breaks, leaks, and/or other infrastructure failures after disruptive events, and/or the like. Management server 224 can also retrieve stored consumption data upon request, such as when detection and analysis application 218 requests pre-event consumption data 106 for comparison with post-event consumption data 108.

Management server 224 is further configured to receive messages related to remedial action 110 initiated by detection and analysis application 218. For example, when management server 224 receives a notification or alert from detection and analysis application 218, management server 224 can log alert or notify technicians, property owners, and/or the like about a potential break or leak. Management server 224 can further trigger additional actions, such as dispatching a technician for an on-site inspection.

In addition, management server 224 can send commands to metering device 202 to configure the operation of metering device 202. The commands can be issued independently or as part of utility management operations and are not necessarily tied to the detection of disruptive events. For example, management server 224 can send a request to adjust the sampling rate of meter 204 or initiate a shut-off command via shut off 208 to disconnect flow of a commodity.

Event detection service 226 provides event data 104 from various sources. Event detection service 226 is configured to provide detection and analysis application 218 with event data 104 associated with potential disruptive events at or near (e.g., within a defined distance, such as one kilometer, five kilometers, ten kilometers, etc.) of metering device 202 and/or near an area to which metering device 202 supplies the commodity. Event data 104 can further include a severity or magnitude of the potential disruptive events (e.g., an earthquake magnitude about a certain level, a wind speed above a certain level, etc.). For example, Event detection service 226 responds to requests from detection and analysis application 218 to return event data 104. For example, when event detection service 226 is the USGS Earthquake Hazards Program API, event detection service 226 returns data about recent earthquakes near metering device 202 or in the area to which metering device 202 supplies the commodity. Similarly, when event detection service 226 is the NWS API, event detection service 226 returns data about recent severe weather near metering device 202 or in the area to which metering device 202 supplies the commodity.

Event detection service 226 can also transmit alerts with event data 104 that meets specific query parameters to detection and analysis application 218 via network 228. For example, when seismic activity or severe weather conditions are identified by event detection service 226, event detection service 226 transmits a message containing corresponding event data 104 to detection and analysis application 218.

In some embodiments, event detection service 226 corresponds to the USGS Earthquake Hazards Program API. The USGS Earthquake Hazards Program is dedicated to monitoring, detecting, and reporting seismic activity in the United States and beyond. The USGS Earthquake Hazards Program maintains a global network of seismometers, provides real-time earthquake data, hazard maps, information for public safety, and emergency response. The USGS Earthquake Hazards Program offers an API that provides real-time access to earthquake data, including event data locations, magnitudes, and occurrence times. This API enables the utilization of earthquake information into applications, devices, and systems for monitoring, analysis, and response.

In some embodiments, event detection service 226 corresponds to the NWS API. The NWS API provides real-time weather forecasts, alerts, and observations for public safety. It maintains an extensive network of monitoring stations and radar systems that track weather patterns, storms, and other events throughout the United States. The NWS API allows developers and third-party systems to access up to date forecasts, advisories, and warnings, enabling integration of weather information into various applications, devices, and platforms for monitoring, analysis, and response.

Network 228 can represent, for example, any technically feasible network or number of networks, including a wide area network (WAN) such as the Internet, a local area network (LAN), a Wi-Fi network, a cellular network, or a combination thereof. Network 228 couples metering device 202 with management server 224 and/or event detection service 226.

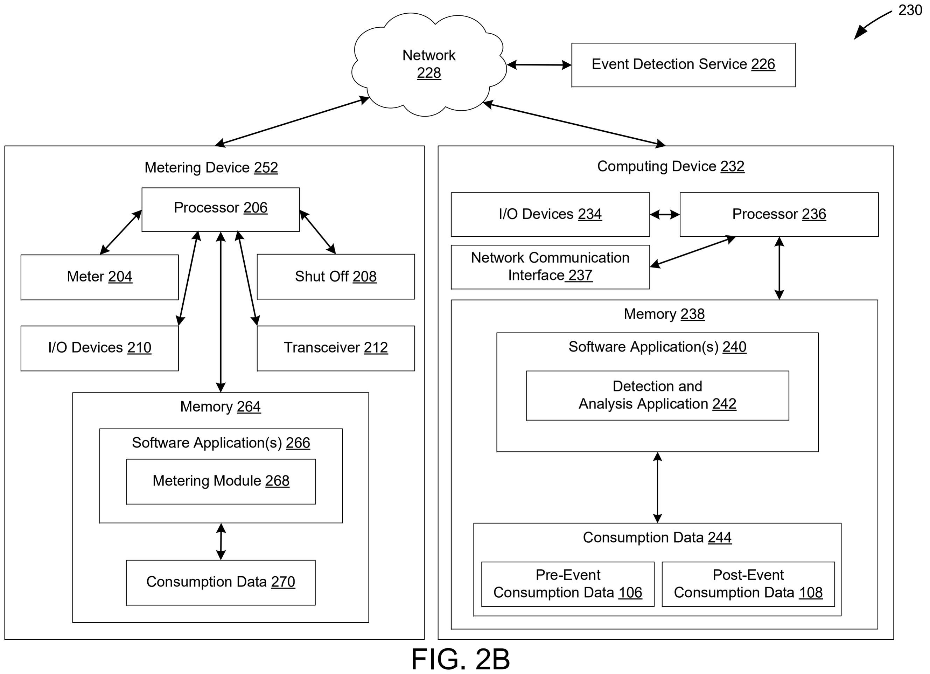

FIG. 2B is a block diagram illustrating a system 230, according to various embodiments. In some embodiments, system 230 is used to implement any of the detection and analysis application 102 of FIG. 1. As shown, system 230 includes, without limitation, a metering device 252, a computing device 232, and an event detection service 226, each of which are connected via a communications network 228.Metering device 252 includes, without limitation, a processor 206, a meter 204, a shut off 208, I/O devices 210, a transceiver 212, and memory 264, coupled together. Memory 264 stores, without limitation, one or more software applications 266 and consumption data 270. The one or more software applications 266 include, without limitation, a metering module 268. Computing device 232 includes, without limitation, I/O devices 234, a processor 236, a network communication interface 237, and memory 238, coupled together. Memory 238 stores, without limitation, one or more software applications 240 and consumption data 244. The one or more software applications 240 include, without limitation, a detection and analysis application 242. Consumption data 244 includes, without limitation, the pre-event consumption data 106, and the post-even consumption data 108.

In some embodiments computing device 232 is a computing device, such as a headend device, a backend server, or some other computing device, located at an office or other facility of a utility provider. In some embodiments, computing device 232 is a computing device associated with the location at which one or more utility commodities are consumed.

Meter 204 monitors the consumption of a commodity (e.g., water, gas, heat, electricity) on behalf of metering device 252. Meter 204 couples the commodity delivery infrastructure (not shown) of a utility to one or more commodity consumption device (not shown). Meter 204 further used one or more sensor devices (not shown) for measuring a rate or amount of consumption of the commodity as the commodity is consumed by the commodity consumption devices. Meter 204 then reports the consumption to metering module 268. Meter 204 can further receive commands from metering module 268 and/or detection and analysis application 242, such as a command to change a sampling rate at which the consumption of the commodity is measured and reported and, optionally, a period of time over which to increase the sampling rate.

Processor 206 coordinates operations of metering device 252. In various embodiments, processor 206 includes any hardware configured to process data and execute software applications. The processor 206 can be any technically feasible processing device configured to process data and execute program instructions. For example, processor 206 could include one or more central processing units (CPUs), digital signal processors (DSPs), graphics processing units (GPUs), application-specific integrated circuits (ASICs), field-programmable gate arrays (FPGAs), microprocessors, microcontrollers, other types of processing units, and/or a combination of different processing units. Processor 206 can include a real-time clock (RTC) (not shown) according to which processor 206 maintains an estimate of the current time. The estimate of the current time can be expressed in Universal Coordinated Time (UTC), although any other standard of time measurement can also be used.

Shut off 208 within metering device 252 is used by detection and analysis application 242 and/or metering module 268 to shut off the supply of the commodity from the commodity delivery infrastructure to the one or more commodity consumption devices. Depending on the type of the commodity, shut off 208 can include one or more valves (e.g., one for each pipe between metering device 252 and the commodity consumption devices), one or more circuit breakers, switches, relays, and/or the like to control whether electricity is provided to each of the circuits feeding electricity to the commodity consumption devices. Based on a command from detection and analysis application 242 and/or metering module 268, shut off 208 can disconnect the flow of the commodity, such as part of the remedial action 110. In some embodiments, shut off 208 can be implemented externally to metering device 252 and incorporated within a separate device, such as a separate shut-off valve (not shown). In such embodiments, remedial action 110 can include receiving one or more commands (e.g., a wired or wireless control signal or message) by the separate shut-off valve from metering module 268 and/or detection and analysis application 242, which, in response, executes disconnection of the commodity flow.

I/O devices 210 include devices configured to receive input, devices configured to provide output, and devices configured to both receive input and provide output. For example, I/O devices 210 can include a display device to show information about the consumption of the commodity, and/or metering module 268, and/or the like. I/O devices 210 can further include one or more user input devices (e.g., buttons, knobs, keys, etc.) to control and/or configure the operation of meter 204, and/or metering module 268. In some embodiments, I/O devices 210 further include one or more sensors for assisting in the detection of disruptive events. The sensors can include accelerometers to detect vibrations, or sudden movements that can indicate a disruptive event near the metering device 252. Tilt sensors can also be included to monitor changes in the orientation of the metering device along three axes (e.g., an x-axis, a y-axis, and a z-axis). Readings from accelerometers and/or the tilt sensors can be used by detection and analysis application 242 to determine whether a disruptive event has occurred.

Transceiver 212 is configured to transmit and/or receive event data 104 and/or other messages to and from computing device 232, and/or other devices using network 228. For example, transceiver 212 transmits one or more messages that include metrology data indicative of commodity consumption measured by meter 204 and recorded by metering module 268 to computing device 232. Transceiver 212 also receives messages and/or alerts from detection and analysis application 242 for delivery to metering module 268 (e.g., increasing sampling rate, shut-off the flow of the commodity). In some embodiments, transceiver 212 transmits data from one or more sensors included in I/O devices 210 (e.g., accelerometers, tilt sensors) to assist detection and analysis application 242 to determine whether a disruptive event has occurred.

Memory 264 can include a random-access memory (RAM) module, a flash memory unit, or any other type of memory unit or combination thereof. The processor 206 is configured to read data from and write data to memory 264. In various embodiments, memory 264 includes non-volatile memory, such as optical drives, magnetic drives, flash drives, or other storage. In some embodiments, separate data stores, such as an external data stores (not shown) included in a network ("cloud storage") can supplement the memory 264. The software applications 266 including metering module 268 within memory 264 can be executed by processor 206 to implement the overall functionality of metering device 252. Memory 264 can further store data in consumption data 270.

Metering module 268 is responsible for controlling the operation of meter 204. This includes sending commands to meter 204 to modify the operation of meter 204 based on various conditions or commands received from detection and analysis application 242. For example, metering module 268 can adjust the sampling rate of meter 204 based on a received command. Metering module 268 can provide consumption data 270 to detection and analysis application 242 from meter 204 periodically or upon request from detection and analysis application 242. In addition, metering module 268 receives consumption data from meter 204 and stores the consumption data in consumption data 270.

Consumption data 270 refers to recorded consumption data of a commodity (e.g., water, gas, heat, or electricity) generated by meter 204. Consumption data 270 can be transmitted via transceiver 212 and/or network 228 to computing device 232 for use by detection and analysis application 242.

Computing device 232 can receive metrology data from metering device 252, including consumption data 270 measured by meter 204. This data can include both pre-event consumption data 106 and post-event consumption data 108, which computing device 232 stores for analysis or reporting. Computing device 232 can further send commands to metering device 252, such as a command to change a sampling rate at which the consumption of the commodity is measured and reported and, optionally, a time period over which the changed sampling rate is to be used.

Computing device 232 can transmit or receive one or more messages to or from event detection service 226 about potential disruptive events. Computing device 232 can also send messages related to remedial action 110 initiated by detection and analysis application 242 to metering device 252.

I/O devices 234 include devices configured to receive input, devices configured to provide output, and devices configured to both receive input and provide output. For example, I/O devices 234 can include a display device to show information about the computing device 232, and/or metering module 268, and/or the like. I/O devices 234 can further include one or more user input devices (e.g., buttons, knobs, keys, etc.) to control and/or configure the operation of computing device 232, and/or metering module 268.

Processor 236 coordinates operations of computing device 232. In various embodiments, processor 236 includes any hardware configured to process data and execute software applications. The processor 236 can be any technically feasible processing device configured to process data and execute program instructions. For example, processor 236 could include one or more central processing units (CPUs), digital signal processors (DSPs), graphics processing units (GPUs), application-specific integrated circuits (ASICs), field-programmable gate arrays (FPGAs), microprocessors, microcontrollers, other types of processing units, and/or a combination of different processing units. Processor 236 can include a real-time clock (RTC) (not shown) according to which processor 236 maintains an estimate of the current time. The estimate of the current time can be expressed in Universal Coordinated Time (UTC), although any other standard of time measurement can also be used.

Network communication interface 237 is configured to transmit and/or receive event data 104 and/or other messages to and from metering device 252, event detection service 226, and/or other devices using network 228. For example, Network communication interface 237 receives one or more messages that include metrology data (e.g., consumption data 270) indicative of commodity consumption measured by meter 204 and recorded by metering module 268. Network communication interface 237 also transmits one or more messages from detection and analysis application 242 to event detection service 226 to request information about potential disruptive events. Network communication interface 237 also receives any responses and/or alerts from event detection service 226 for delivery to detection and analysis application 242. Network communication interface 237 can further receive event data 104 from sensors in I/O devices 210. In addition, network communication interface 237 transmits one or more messages associated with the remedial action 110 to metering module 268.

Memory 238 can include a random-access memory (RAM) module, a flash memory unit, or any other type of memory unit or combination thereof. The processor 236 is configured to read data from and write data to memory 238. In various embodiments, memory 238 includes non-volatile memory, such as optical drives, magnetic drives, flash drives, or other storage. In some embodiments, separate data stores, such as an external data stores (not shown) included in a network ("cloud storage") can supplement the memory 238. The software applications 240 including detection and analysis application 242 within memory 238 can be executed by processor 236 to implement the overall functionality of computing device 232. Memory 238 can further store data such as pre-event consumption data 106 and post-event consumption data 108 generated by meter 204 in consumption data 244.

Detection and analysis application 242 is responsible for working with metering module 268 to detect when a disruptive event occurs, compare pre-event consumption data 106 with post-event consumption data 108, and perform one or more remedial actions 110. In some examples, detection and analysis application performs some or all of the functionality of detection and analysis application 102 and/or detection and analysis application 218.

Detection and analysis application 242 receives consumption data 270 from metering module 268 and stores consumption data 270 as consumption data 244. Depending upon whether detection and analysis application 242 has detected a disruptive event, consumption data 270 is stored as either pre-event consumption data 106 or post-event consumption data 108. Detection and analysis application 242 can also store any of consumption data 270, consumption data 244, pre-event consumption data 106, and/or post-event consumption data 108 in a database for later analysis. In some embodiments, detection and analysis application 242 performs data analytics and/or pattern recognition on consumption data 270, consumption data 244, pre-event consumption data 106, and/or post-event consumption data 108 to determine patterns of consumption, disaggregated consumption patterns, identification of patterns that are indicative of breaks, leaks, and/or other infrastructure failures after disruptive events, and/or the like.

In some embodiments, detection and analysis application 242 detects whether a disruptive event has occurred by transmitting, via network communication interface 237 and/or network 228, one or more requests to event detection service 226 to request information about potential disruptive events at or near (e.g., within a defined distance, such as one kilometer, five kilometers, ten kilometers, etc.) of metering device 252 and/or near an area to which metering device 252 supplies the commodity. The requested information can further include a severity or magnitude of the potential disruptive events (e.g., an earthquake magnitude about a certain level, a wind speed above a certain level, etc.). For example, detection and analysis application 242 can send a request to the USGS Earthquake Hazards Program API about recent earthquakes. Additionally or alternatively, detection and analysis application 242 can send a request to the NWS API for information about recent severe weather. In some embodiments, detection and analysis application 242 sends a request to event detection service 226 to automatically send alerts to detection and analysis application 242 about potential disruptive events that occur within at or near of metering device 252. In some embodiments, detection and analysis application 242 identifies one or more metering devices, such as metering device 252, that are within an area affected by the disruptive event and perform analysis of post-event consumption data 108 for those metering devices in the affected area as discussed further below.

In some embodiments, detection and analysis application 242 uses data from one or more sensors included in I/O devices 210 (e.g., accelerometers, tilt sensors) to assist determining whether a disruptive event has occurred. For example, detection and analysis application 242 can set a predefined threshold for accelerometer readings to detect abrupt movements typically associated with seismic activity. When the accelerometer output exceeds a specific threshold, such as a certain magnitude of acceleration (e.g., 0.5g or 1.0g over a short period, detection and analysis application 242 detects a potential disruptive event. In another example, detection and analysis application 242 can monitor tilt sensors for a change in orientation over a defined time interval. For example, detection and analysis application 242 can record the output of tilt sensors periodically (e.g., every thirty seconds, every sixty seconds, etc.) and calculate an average in the tilt angle. If the average change in tilt exceeds a certain threshold (e.g., twenty degrees average deviation over thirty seconds), detection and analysis application 242 detects a potential disruptive event.

In some embodiments, when detection and analysis application 242 detects a disruptive event, detection and analysis application 242 sends a command to metering module 268 of metering device 252 (e.g., a metering device that may be affected by the disruptive event), to increase a sampling rate used by meter 204 to collect the post-event consumption data 108. This adjustment enables post-event consumption data 108 to be collected more frequently, so as to allow detection and analysis application 242 to identify any atypical consumption more quickly after the detection of a disruptive event. The command can during indicate a time period during which the increased sampling rate is to be used. Detection and analysis application 242 then compares pre-event consumption data 106 with post-event consumption data 108, to determine whether there has been a change in the consumption data that might be due to the disruptive event.

In some embodiments, detection and analysis application 242 evaluates the pre-event consumption data 106 to determine a threshold consumption value based on a steady-state consumption rate. For example, detection and analysis application 242 can determine the steady-state consumption rate based on an average consumption value over a defined period of time (e.g., five seconds, ten seconds, thirty seconds, one minute, five minutes, etc.) prior to the disruptive event. The threshold consumption value can then be set at a fixed percentage (e.g., five percent, ten percent, twenty percent, etc.) above the average consumption value. Additionally, the threshold consumption value could also be adjusted based on a type of location where the pre-event consumption data 106 is being captured, a size of an area to which metering device 252 supplies the commodity, and/or a history of consumption by metering device 252. Detection and analysis application 242 then evaluates the post-event consumption data 108 to determine a post-event steady state consumption rate (e.g., an average consumption rate) over a defined period of time (e.g., five seconds, ten seconds, thirty seconds, one minute, five minutes, etc.) after the disruptive event. When the post-event consumption rate is above the threshold consumption value, this indicates an increase in consumption that could be due to a break, leak, and/or other infrastructure failure. When detection and analysis application 242 suspects a possible leak, break and/or other infrastructure failure, detection and analysis application 242 performs the remedial action 110.

In some embodiments, detection and analysis application 242 compares the pre-event consumption data 106 with the post-event consumption data 108 based on disaggregated consumption patterns. Disaggregated consumption patterns break down commodity consumption patterns over time. The disaggregated consumption patterns associate different amounts of commodity consumption with particular activities or consumption by particular devices. The disaggregated consumption can then be reaggregated to determine a total amount of consumption. For example, water consumption can be separated (e.g., disaggregated) into amounts of consumption by dishwashers, washing machines, restrooms, and/or the like. Gas consumption can be separated into amounts of consumption by water heaters, heating systems, gas ranges, and/or the like. Electricity consumption can be separated into consumption amounts of consumption by lighting, air conditioning systems, and/or the like. By comparing the disaggregated consumption patterns in the pre-event consumption data 106 to disaggregated consumption patterns in the post-event consumption data 108, detection and analysis application 242 can identify changes in consumption that can indicate a leak, break and/or infrastructure failure associated with a specific consumption device or activity. For example, if one water heater consumes more gas than expected based on the pre-event disaggregated consumption associated with the water heater after a disruptive event, detection and analysis application 242 indicates potential leak or break is a gas line associated with the water heater and performs the remedial action 110.

In some embodiments, detection and analysis application 242 evaluates time-of-use profiles from the pre-event consumption data 106 to determine typical commodity consumption during defined periods of time (e.g., hourly, daily, weekly, or seasonally) prior to a disruptive event. The time-of-use profiles represent trends in consumption of a commodity, such as increased electricity consumption in the evening when residents are typically at home, or increased electricity consumption during hot summer afternoons due to operation of air conditioners. Once the time-of-use profiles are generated, detection and analysis application 242 compares the post-event consumption data 108 to the generated time-of-use profiles to identify deviations. For example, if a sudden increase in consumption is detected during a time typically characterized by low demand such as gas consumption in early morning hours, this deviation represents atypical consumption. Such atypical consumption can indicate possible leak, break and/or other infrastructure failure. When atypical consumption is detected, detection and analysis application 242 performs the remedial action 110.

Detection and analysis application 242 performs remedial action 110 after identification of an atypical consumption detected using any of the techniques described above including, without limitation, the use of a threshold consumption value, disaggregated consumption patterns, and/or time-of-use profiles. Remedial action 110 can include sending a notification to dispatch a technician for an on-site inspection of the installation location of metering device 252 or to notify the property owner of the installation location. Another remedial action can include sending a command to metering module 268 to stop flow of the whole commodity or just to the impacted device or circuit if disaggregated patterns is used.

Consumption data 244 includes amounts of a commodity (e.g., water, gas, heat, or electricity) measured by meter 204. Consumption data 244 includes pre-event consumption data 106 and post-event consumption data 108, which are used to analyze commodity consumption and detect potential disruptive event by detection and analysis application 242.

Pre-event consumption data 106 includes amounts of a commodity consumed before a disruptive event occurs. Pre-event consumption data 106 can include disaggregated consumption data, which breaks down consumption data by particular devices or particular activities (e.g., water heaters, dishwashers, lighting systems), as well as time-of-use profiles, which reflect typical consumption of a commodity trends over defined periods (e.g., hourly, daily, or seasonally). Pre-event consumption data 106 establishes a baseline of steady state consumption, allowing detection and analysis application 242 to evaluate threshold values for disruptive event detection.

Post-event consumption data 108 includes amounts of a commodity consumed after a disruptive event occurs. Post-event consumption data 108 records atypical consumption data caused by potential leaks, breaks, or other infrastructure failures. Meter 204 increases the sampling rate of commodity consumption upon command from detection and analysis application 242. Detection and analysis application 242 utilize pre-event consumption data 106 and the post-even consumption data 108 to determine deviation in the post-event consumption data 108 by evaluating consumption against threshold values, disaggregated usage patterns, or time-of-use profiles.

Event detection service 226 provides event data 104 from various sources. Event detection service 226 is configured to provide detection and analysis application 242 potential disruptive events at or near (e.g., within a defined distance, such as one kilometer, five kilometers, ten kilometers, etc.) of metering device 252 and/or near an area to which metering device 252 supplies the commodity. Event detection service 226 can also provide a severity or magnitude of the potential disruptive events (e.g., an earthquake magnitude about a certain level, a wind speed above a certain level, etc.). For example, Event detection service 226 responds to requests from detection and analysis application 242 to return event data. For example, when event detection service 226 is the USGS Earthquake Hazards Program API, event detection service 226 returns data about recent earthquakes near metering device 252. Similarly, when event detection service 226 is the NWS API, event detection service 226 returns data about recent severe weather near metering device 252.

Event detection service 226 can also transmit alerts, based on specific query parameters, with event data 104 to detection and analysis application 242 via network 228 and/or network communication interface 237. For example, when seismic activity or severe weather conditions are identified by event detection service 226 within a desired distance of metering device 252 and/or near the area to which metering device 252 supplies the commodity, event detection service 226 transmits a message containing corresponding event data 104 to detection and analysis application 242.

In some embodiments, event detection service 226 corresponds to the USGS Earthquake Hazards Program API. The USGS Earthquake Hazards Program is dedicated to monitoring, detecting, and reporting seismic activity in the United States and beyond. The USGS Earthquake Hazards Program maintains a global network of seismometers, provides real-time earthquake data, hazard maps, information for public safety, and emergency response. The USGS Earthquake Hazards Program offers an API that provides real-time access to earthquake data, including event data locations, magnitudes, and occurrence times. This API enables the utilization of earthquake information into applications, devices, and systems for monitoring, analysis, and response.

In some embodiments, event detection service 226 corresponds to the NWS API. The NWS API provides real-time weather forecasts, alerts, and observations for public safety. It maintains an extensive network of monitoring stations and radar systems that track weather patterns, storms, and other events throughout the United States. The NWS API allows developers and third-party systems to access up to date forecasts, advisories, and warnings, enabling integration of weather information into various applications, devices, and platforms for monitoring, analysis, and response.

Network 228 can represent, for example, any technically feasible network or number of networks, including a wide area network (WAN) such as the Internet, a local area network (LAN), a Wi-Fi network, a cellular network, or a combination thereof. Network 228 couples metering device 252 with computing device 232 and/or event detection service 226.

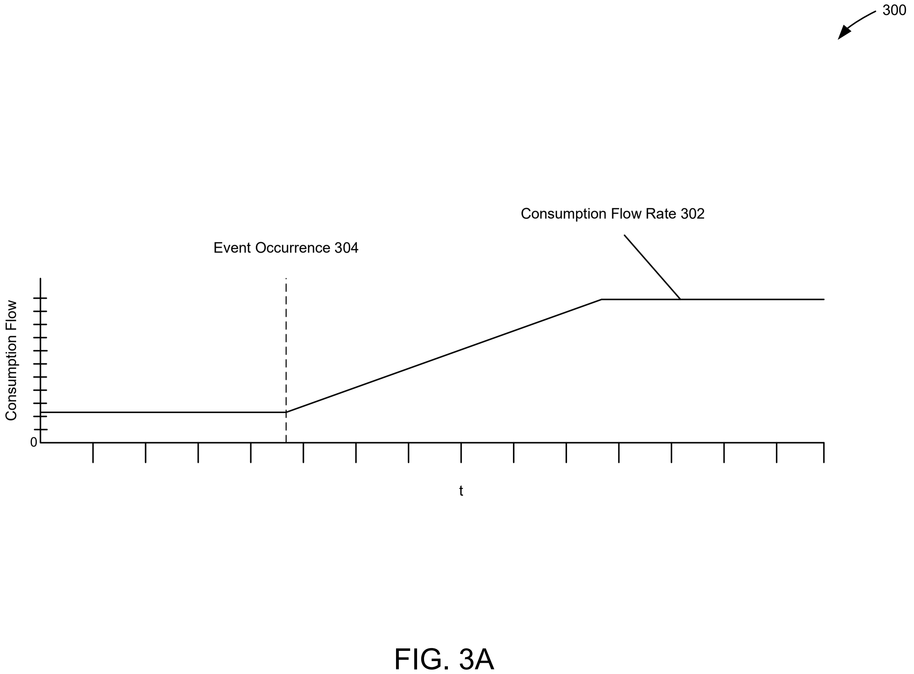

FIG. 3A illustrates an example of consumption data 300 for a utility commodity before and after a disruptive event, according to various embodiments. Persons skilled in the art will understand that consumption data 300 is just one non-limiting example of consumption data that can be received by detection and analysis application 102, 218, and/or 242. As shown in FIG. 3A, consumption data 300 is indicative of the consumption of a utility commodity, such as water, electricity, heat, or gas, over time t (e.g., over the course of multiple hours). For example, consumption data 300 is indicative of respective consumption flow rate 302 of a utility commodity before and after disruptive event occurrence 304.

Disruptive event occurrence 304 represents a disruptive event such as an earthquake, hurricane, tornado, or other severe weather disturbance. Disruptive event occurrence 304 can be identified based on information from one or more external sources (e.g., USGS or NWS) or from internal sources in a metering device (e.g., accelerometers, tilt sensors). Consumption data 300 further includes information about commodity consumption for the periods before and after disruptive event occurrence 304. During the pre-event period, consumption flow rate 302, which corresponds to pre-event consumption data 106, exhibits a relatively steady-state profile, reflecting normal commodity consumption. During the post-event period following disruptive event occurrence 304, an increase in consumption flow rate 302, which corresponds to post-event consumption data 108, is observed. This increase and change in consumption flow rate 302 after disruptive event occurrence 304 can be detected by detection and analysis application 102, 218, and/or 242 and can be identified as potentially indicating a failure such as a pipe break, leak, or electrical fault caused by the disruptive event associated with disruptive event occurrence 304.

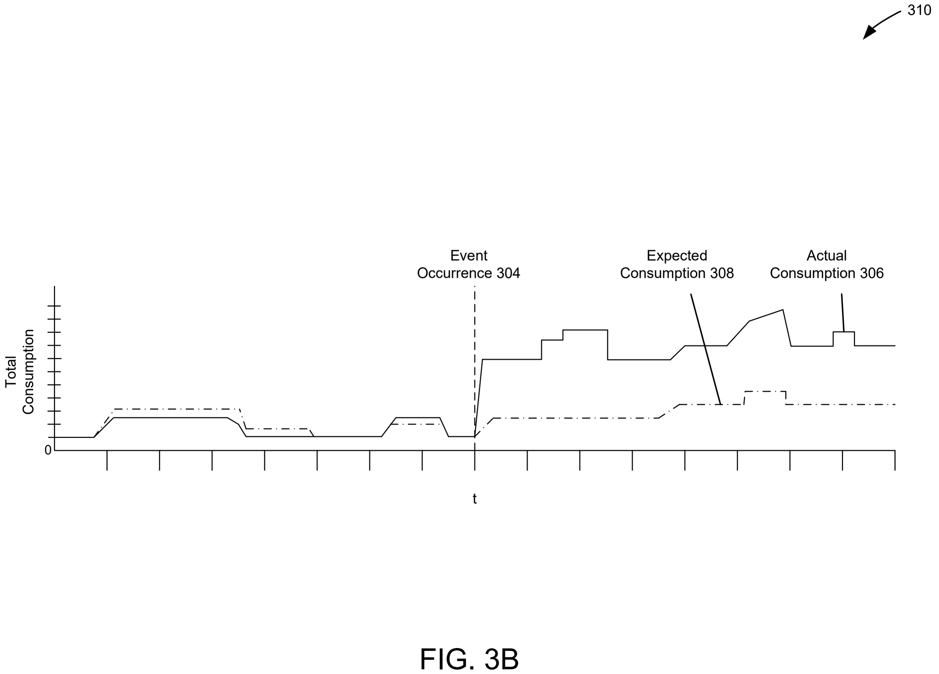

FIG. 3B illustrates another example of consumption data 310 for a utility commodity before and after a disruptive event, according to various embodiments. Consumption data 310 is indicative of the consumption of a utility commodity, such as water, electricity, heat, or gas, over time t (e.g., over the course of multiple hours). Consumption data 310 includes actual consumption 306 data and expected consumption 308 data of a utility commodity, and respective durations during which the utility commodity was consumed, including from both before and after disruptive event occurrence 304.

As shown in FIG. 3B, consumption data indicates consumption of a commodity received and analyzed by detection and analysis application 102, 218, and/or 242. Atypical consumption is characterized by actual consumption 306 diverging from expected consumption 308, which is derived from time-of-use profiles of the commodity consumption evaluated by detection and analysis application 102, 218, and/or 242. In addition, consumption of a commodity can be considered atypical when the actual consumption 306 that is consumed exceeds a threshold relative to expected consumption 308 as evaluated by detection and analysis application 102, 218, and/or 242.

For example, actual consumption 306 of water might have fluctuations at particular times as indicated by expected consumption 308. During the period before disruptive event occurrence 304, actual consumption 306 does not deviate from expected consumption 308 by more than a threshold, which would be typical for most consumption profiles. However, after disruptive event occurrence 304, actual consumption 306 begins to deviate significantly and more than a threshold from expected consumption 308. Such an increase after disruptive event occurrence 304 is indicative of a potential break, leak, and/or fault that might have occurred as a result of disruptive event occurrence 304.

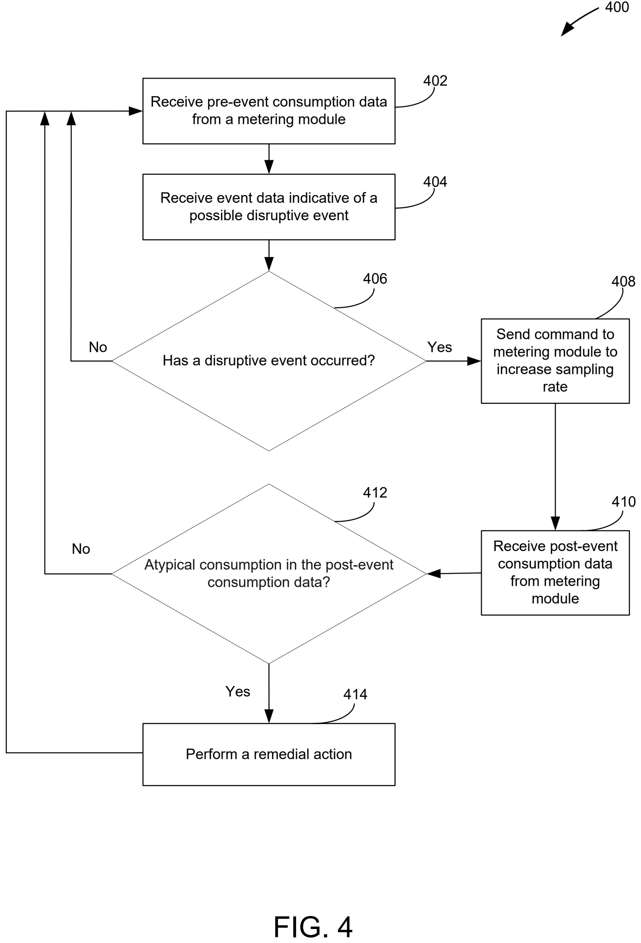

FIG. 4 is a flow diagram illustrating method steps of a method 400 for analyzing and detecting atypical consumption of a utility commodity and performing a remedial action, according to various embodiments. Although the method steps are described with reference to the embodiments of FIGs. 1-3B, persons skilled in the art will understand that any system configured to implement the method steps, in any order, falls within the scope of the present disclosure.

As shown, method 400 begins at step 402, where detection and analysis application 102, 218, and/or 242 receives pre-event consumption data 106 of a commodity measured by a meter, such as meter 204. Pre-event consumption data 106 indicates commodity consumption over time from before the occurrence of a disruptive event. Pre-event consumption data 106 includes the flow rate and/or amount of the commodity consumption, such as water, gas, heat, or electricity, infrastructure measured by meter 204.

At step 404, detection and analysis application 102, 218, and/or 242 receives event data 104 indicative of a possible disruptive event. The possible disruptive event could correspond to, without limitation, an earthquake, hurricane, tornado, or severe weather condition. In some embodiments, detection and analysis application 102, 218, and/or 242 detects a disruptive event by transmitting one or more requests to event detection service 226 (e.g., to USGS Earthquake Hazards Program API and/or NWS API) to request information about potential disruptive events at or near (e.g., within a defined distance, such as one kilometer, five kilometers, ten kilometers, etc.) of metering device 202 and/or 252 and/or near an area to which metering device 202 and/or 252 supplies the commodity. The requested information can further include a severity or magnitude of the potential disruptive events (e.g., an earthquake magnitude about a certain level, a wind speed above a certain level, etc.). The responses from event detection service 226 can include event data 104 that include details such as the severity or magnitude of the event, for example, an earthquake of a specific magnitude or wind speeds exceeding predefined thresholds, the location of the event, and/or event occurrence time.

In some embodiments, detection and analysis application 102, 218, and/or 242 can detect a disruptive event based on event data 104 received from sensors of metering device 202 and/or 252, such as accelerometers or tilt sensors. Detection and analysis application 102, 218, and/or 242 can use readings from the accelerometers to detect movements or vibrations of metering device 202 and/or 252 that are greater than predefined thresholds (e.g., 0.5g or 1.0g), indicating a potential disruptive event. In addition, detection and analysis application 102, 218, and/or 242 can use readings from the tilt sensors to determine a change in tilt angle of metering device 252. If the change in tilt exceeds a certain threshold (e.g., twenty degrees average deviation over thirty seconds), detection and analysis application 102, 218, and/or 242 detects a potential disruptive event.

At step 406, detection and analysis application 102, 218, and/or 242 determines whether a disruptive event has occurred. If detection and analysis application 102, 218, and/or 242 does not receive event data 104 indicative of a disruptive event (406 - No), then method 400 returns to step 402 at which detection and analysis application 102, 218, and/or 242 receives new pre-event consumption data 106 and new event data 104 indicative of a potential disruptive event and repeats method 400. If detection and analysis application 102, 218, and/or 242 detects event data 104 indicative of a disruptive event (406 - Yes), then method 400 proceeds to optional step 408.

At optional step 408, detection and analysis application 102, 218, and/or 242 sends one or more commands to metering module 220 to increase the sampling rate used by meter 204. Increasing the sampling rate allows detection and analysis application 102, 218, and/or 242 to obtain more rapidly post-event consumption data 108 following the disruptive event in order to detect atypical consumption more quickly after the disruptive event. In some examples, the one or more commands further specify a time period during which the increased sampling rate is to be used.

At step 410, detection and analysis application 102, 218, and/or 242 receives post-event consumption data 108 from metering module 220. The post-event consumption data 108 indicates commodity consumption immediately following the disruptive event.

At step 412, detection and analysis application 102, 218, and/or 242 determines whether there is atypical consumption in post-event consumption data 108 received during step 410. By comparing post-event consumption data 108 with pre-event consumption data 106, detection and analysis application 102, 218, and/or 242 is able to identify atypical consumption, such as significant deviations in flow rate, volume, total consumption, or consumption patterns of the commodity. Detection and analysis application 102, 218, and/or 242 evaluates post-event consumption data 108 against predefined thresholds, disaggregated usage patterns, or time-of-use profiles determined from pre-event consumption data 106 to detect inconsistencies indicative of potential issues like leaks, breaks, or faults. For example, an increase in flow rate exceeding 20% above the pre-event steady-state profile or consumption occurring during periods of historically low consumption can indicate an atypical consumption. If detection and analysis application 102, 218, and/or 242 does not detect unexpected consumption in post-event consumption data 108 (412 - No), then method 400 returns to step 402 at which detection and analysis application 102, 218, and/or 242 continues to receive pre-event consumption data 106 of a commodity from a metering module 220 measured by meter 204.

If detection and analysis application 102, 218, and/or 242 detects unexpected consumption in post-event consumption data 108 (412 - Yes), then method 400 proceeds to step 414 at which detection and analysis application 218 sends one or more commands to initiate remedial actions. The one or more commands can include instructing metering module 220 to activate shut off 208 to isolate the affected section of the utility infrastructure, such as closing a valve in a gas or water pipeline or cutting power to a specific circuit. Detection and analysis application 102, 218, and/or 242 can also send alerts to management server 224, notifying utility personnel or property owners of the detected atypical consumption. The notification can include details about the disruptive event, such as, the severity (e.g., earthquake magnitude), the affected location, and occurrence time, the commodity subject to atypical consumption, and/or the like. In some embodiments, detection and analysis application 102, 218, and/or 242 provides alerts for further action, such as scheduling an on-site inspection, or deploying emergency response teams to prevent additional damage. After performing the remedial action, detection and analysis application 102, 218, and/or 242 returns to step 402 to repeat method 400.

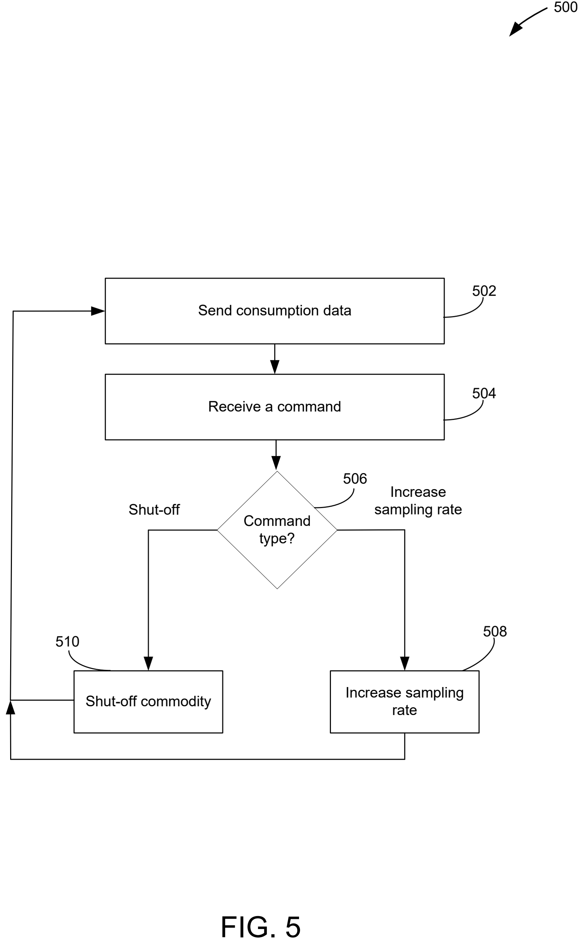

FIG. 5 is a flow diagram illustrating method steps of a method 500 performed by a metering module, according to various embodiments. Although the method steps are described with reference to the embodiments of FIGs. 1-3B, persons skilled in the art will understand that any system configured to implement the method steps, in any order, falls within the scope of the present disclosure.

As shown, method 500 begins at step 502, where meter 204 sends consumption data to detection and analysis application 102, 218, 242 and/or in some embodiments to management server 224. The consumption data can include both pre-event consumption data 106 and/or post-event consumption data 108. Consumption data includes, without limitation, the flow rate and/or amount of the commodity consumption, such as water, gas, heat, or electricity, infrastructure measured by meter 204.

At step 504, metering module 220 and/or 268 receives a command to initiate specific actions. The command can originate from detection and analysis application 102, 218, and/or 242 and/or management server 224. The received commands can include instructions to increase the sampling rate of meter 204, instructions to perform remedial actions, such as activating shut off 208, and/or the like.

At step 506, metering module 220 and/or 268 determines a type of the command received during step 504. If metering module 220 and/or 268 receives a command to increase the sampling rate, then method 500 proceeds to step 508 where metering module 220 and/or 268 modifies the sampling rate of meter 204. If metering module 220 and/or 268 receives a shut-off command, then method 500 proceeds to step 510 where metering module 220 and/or 268 activates shut off 208 to isolate the affected section of the utility infrastructure.

At step 508, metering module 220 and/or 268 sends a command to meter 204 to have meter 204 measure and record consumption data 222 and/or 270 at a faster rate. In some examples, the command indicates a period of time during which the faster sampling rate is to be used. After commanding meter 204 to the sampling rate of consumption data, metering module 220 and/or 268 returns to step 502 to repeat method 500.

At step 510, metering module 220 and/or 268 commands shut off 208 to shut off further flow of the commodity. Depending upon the instructions in the command received during step 504, metering module 220 and/or 268 commands shut off 208 to shut off the supply of the commodity from the commodity delivery infrastructure to one or more commodity consumption devices. For example, metering module 220 and/or 268 can command shut off 208 to stop flow of the whole commodity or just to the impacted device or circuit. After commanding shut off 208, to stop flow of the commodity, metering module 220 and/or 268 returns to step 502 to repeat method 500.

### Network Infrastructure

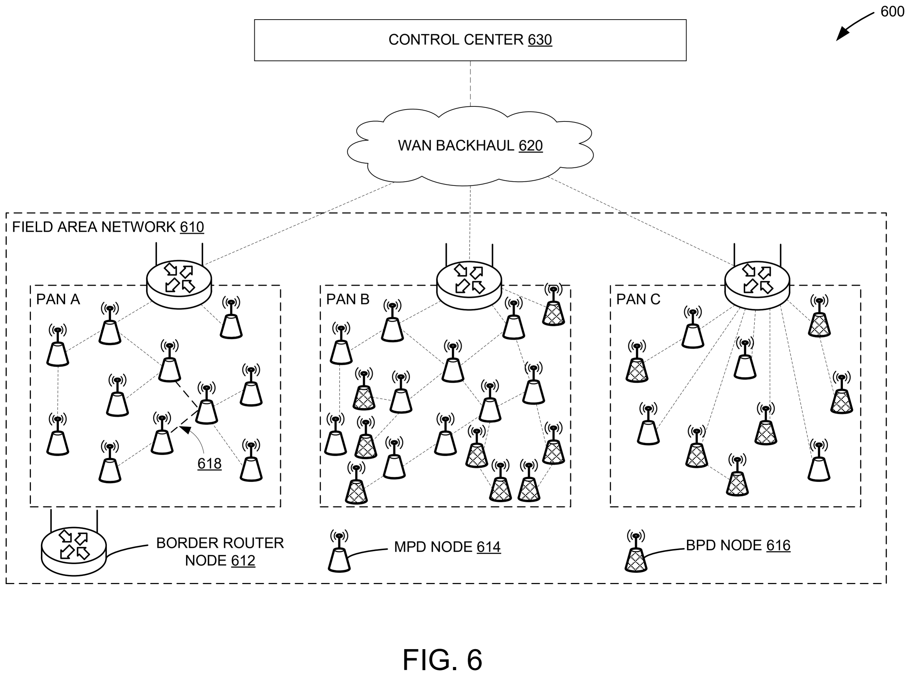

FIG. 6 illustrates a network system configured to implement one or more aspects of the various embodiments. As shown, network system 600 includes a field area network (FAN) 610, a wide area network (WAN) backhaul 620, and a control center 630. FAN 610 is coupled to control center 630 via WAN backhaul 620. Control center 630 is configured to coordinate the operation of FAN 610.

FAN 610 includes personal area network (PANs) A, B, and C. PANs A and B are organized according to a mesh network topology, while PAN C is organized according to a star network topology. Each of PANs A, B, and C includes various network devices including at least one border router node 612 and one or more mains-powered device (MPD) nodes 614. PANs B and C further include one or more battery-powered device (BPD) nodes 616. Any of the one or more MPD nodes 614 or the BPD nodes 616 can be used to implement the techniques discussed above with respect to FIGs. 1-5. In various embodiments, metering device 202, metering device 252, and/or computing device 232 are implemented as node 614 or 616. In some embodiments, management server 224 and/or computing device 232 is implemented as or is part of control center 630.

MPD nodes 614 draw power from an external power source, such as mains electricity or a power grid. MPD nodes 614 typically operate on a continuous basis without powering down for extended periods of time. BPD nodes 616 draw power from an internal power source, such as a battery. BPD nodes 616 typically operate intermittently and power down, go to very low power mode, for extended periods of time in order to conserve battery power.

MPD nodes 614 and BPD nodes 616 are coupled to, or included within, a utility distribution infrastructure (not shown) that distributes a resource to consumers. MPD nodes 614 and BPD nodes 616 gather sensor data related to the distribution of the resource, process the sensor data, and communicate processing results and other information to control center 630. Border router nodes 612 operate as access points to provide MPD nodes 614 and BPD nodes 616 with access to control center 630.

Any of border router nodes 612, MPD nodes 614, and BPD nodes 616 are configured to communicate directly with one or more adjacent nodes via bi-directional communication links 618. The communication links 618 may be wired or wireless links, although in practice, adjacent nodes of a given PAN exchange data with one another by transmitting data packets via wireless radio frequency (RF) communications. The various node types are configured to perform a technique known in the art as "channel hopping" in order to periodically receive data packets on varying channels. As known in the art, a "channel" may correspond to a particular range of frequencies. In one embodiment, a node may compute a current receive channel by evaluating a Jenkins hash function based on a total number of channels and the media access control (MAC) address of the node.

In some examples, MPD nodes 614 or BPD nodes 616 can communicate directly with control center 630 via respective cellular communication links. In such examples, MPD nodes 614 or BPD nodes 616 can transmit messages to and/or receive messages from control center 630 without using border router nodes 612. Furthermore, in some examples, control center 630 is implemented as MPD nodes 614 or BPD nodes 616. In such examples, MPD nodes 614 and BPD nodes 616 can perform the control and/or data analysis functions described herein with respect to control center 630.

In some examples, each node within a given PAN can implement a discovery protocol to identify one or more adjacent nodes or "neighbors." A node that has identified an adjacent, neighboring node can establish a bi-directional communication link 618 with the neighboring node. Each neighboring node may update a respective neighbor table to include information concerning the other node, including one or more of the MAC address of the other node, listening schedule information for the other node, a received signal strength indication (RSSI) of the communication link 618 established with that node, and the like.

Nodes can compute the channel hopping sequences of adjacent nodes to facilitate the successful transmission of data packets to those nodes. In embodiments where nodes implement the Jenkins hash function, a node computes a current receive channel of an adjacent node using the total number of channels, the MAC address of the adjacent node, and a time slot number assigned to a current time slot of the adjacent node.

Any of the nodes discussed above may operate as a source node, an intermediate node, or a destination node for the transmission of data packets. A given source node can generate a data packet and then transmit the data packet to a destination node via any number of intermediate nodes (in mesh network topologies). The data packet can indicate a destination for the packet and/or a particular sequence of intermediate nodes to traverse in order to reach the destination node. In one embodiment, each intermediate node can include a forwarding database indicating various network routes and cost metrics associated with each route.

Nodes can transmit messages and/or data packets across a given PAN and across WAN backhaul 620 to control center 630. Similarly, control center 630 can transmit messages and/or data packets across WAN backhaul 620 and across any given PAN to a particular node included therein. As a general matter, numerous routes can exist which traverse any of PANs A, B, and C and include any number of intermediate nodes, thereby allowing any given node or other component within network system 600 to communicate with any other node or component included therein.

Control center 630 includes one or more server machines (not shown) or other computing devices (not shown) configured to operate as sources for, or destinations of, messages and/or data packets that traverse within network system 600. The server machines can query nodes within network system 600 to obtain various data, including raw or processed sensor data, power consumption data, node/network throughput data, status information, and so forth. The server machines can also transmit commands and/or program instructions to any node within network system 600 to cause those nodes to perform various operations. In one embodiment, each server machine is a computing device configured to execute, via a processor, a software application stored in a memory to perform various network management operations. In various embodiments, management server 224 is implemented as control center 630.

In sum, the disclosed techniques detect potential breaks or leaks in commodity distribution systems due to disruptive events such as earthquakes or severe weather. The techniques include a detection system receiving consumption data from a commodity meter before an event occurs. Once the event is detected through external data sources, such as the USGS Earthquake Hazards Program API or the NWS API, or via internal sensor data from a metering device, the detection system sends a command to a metering module in the metering device to increase a sampling rate of commodity consumption. The detection system then receives additional post-event consumption data and compares the pre-event consumption data with the post-even consumption data to determine whether atypical consumption is present in the post-event consumption data. If atypical consumption is detected in the post-event consumption data, the detection system performs a remedial action, such as sending a notification to a utility provider or property owner, scheduling an inspection, and/or shutting off supply of the commodity.

At least one technical advantage of the disclosed techniques is that, with the disclosed techniques, potential losses or hazards in commodity distribution systems due to disruptive events, such as earthquakes and severe weather can be rapidly and automatically detected. In addition, the disclosed techniques eliminate the need for onsite inspection of the commodity distribution system in order to make a preliminary assessment of whether a break or leak is present in a commodity distribution system. This mitigates the wasting of the commodity and reduces the risks due to a break or leak in the commodity distribution system.

The following clauses describe aspects of various embodiments.
1. In some embodiments, a method comprises detecting, by a computing device, an event occurring at a location proximate a metering device, the event corresponding to an earthquake or a severe weather event, receiving, by the computing device, first consumption data for a commodity, the first consumption data being collected by the metering device after the event, comparing the first consumption data with second consumption data for the commodity, the second consumption data being collected by the metering device before the event, and in response to the comparing, performing, by the computing device, a remedial action.
2. The method of clause 1, wherein the commodity is water, gas, heat, or electricity.
3. The method of clauses 1 or 2, wherein the metering device is within a threshold distance of the location.
4. The method of any of clauses 1-3, wherein detecting the event comprises receiving event information from at least one of United States Geological Survey Earthquake Hazards Program API or National Weather Service API.
5. The method of any of clauses 1-4, wherein detecting the event comprises analyzing tilt or accelerometer data from one or more sensors in the metering device.
6. The method of any of clauses 1-5, wherein the remedial action comprises at least one of scheduling an onsite inspection or transmitting a notification to a back office server, a utility provider, or a property owner associated with the metering device.
7. The method of any of clauses 1-6, wherein the remedial action comprises commanding the metering device or a separate shut-off device to shut off flow of the commodity.
8. The method of any of clauses 1-7, wherein comparing the first consumption data with the second consumption data comprises determining whether a first flow rate associated with the first consumption data is more than a threshold above a second flow rate associated with the second consumption data.
9. The method of any of clauses 1-8, wherein comparing the first consumption data with the second consumption data comprises determining that a consumption pattern in the first consumption data differs from a time of use profile determined from the second consumption data.
10. The method of any of clauses 1-9, wherein comparing the first consumption data with the second consumption data comprises comparing the first consumption data with disaggregated usage patterns determined from the second consumption data.
11. The method of any of clauses 1-10, further comprising commanding, by the computing device in response to detecting the event, the metering device to increase a sampling rate for the first consumption data.
12. In some embodiments, one or more non-transitory computer-readable media store instructions which, when executed by one or more processors, cause the one or more processors to perform operations comprising determining that a disruptive event has occurred in a vicinity of a utility meter, the disruptive event corresponding to an earthquake or a severe weather event, obtaining first data indicating consumption of a commodity measured by the utility meter after the disruptive event, determining that there is atypical consumption of the commodity at a location served by the utility meter by comparing the first data with second data indicating a baseline consumption of the commodity measured by the utility meter before the occurrence of the disruptive event, and in response to determining that there is atypical consumption of the commodity, performing a remedial action.
13. The one or more non-transitory computer-readable media of clause 12, wherein the commodity is water, gas, heat, or electricity.
14. The one or more non-transitory computer-readable media of clauses 12 or 13, wherein determining that the event has occurred comprises requesting information about potential disruptive events from at least one of United States Geological Survey Earthquake Hazards Program API or National Weather Service API.
15. The one or more non-transitory computer-readable media of any of clauses 12-14, wherein the remedial action comprises at least one of scheduling an inspection by utility personnel, sending an alert to a server, a utility providing the commodity, or an owner of a property served by the utility meter, or commanding a shut off of the utility meter to stop providing the commodity.
16. The one or more non-transitory computer-readable media of any of clauses 12-15, wherein determining that there is atypical consumption of the commodity comprises one or more of determining that a flow rate of the commodity determined from the first data exceeds a flow rate determined from the baseline consumption from the baseline consumption of the commodity, determining that a pattern of commodity consumption determined from the first data differs from a pattern of commodity consumption in the baseline consumption, or determining that the pattern of commodity consumption from the first data differs from a pattern of disaggregated consumption in the baseline consumption.
17. In some embodiments, a computing device comprises one or more processors, and a memory storing executable instructions which, when executed by the one or more processors, cause the one or more processors to perform operations comprising receiving data indicating that a disruptive event has occurred with a threshold distance of a commodity meter, the disruptive event corresponding to an earthquake or a severe weather event, receiving first metrology data from the commodity meter, the first metrology data identifying an amount of a commodity consumed by one or more devices served by the commodity meter, receiving second metrology data identifying an amount of the commodity consumed by the one or more devices prior to the disruptive event, comparing the first metrology data with the second metrology data to determine whether there is a likelihood of a leak, a break, a short, or a failure in a commodity distribution infrastructure downstream of the commodity meter, and in response to determining that there is a likelihood of the leak, the break, the short, or the failure, performing a remedial action.
18. The computing device of clause 17, wherein the commodity is water, gas, heat, or electricity.
19. The computing device of clauses 17 or 18, wherein the remedial action comprises at least one of causing a valve or circuit breaker to disconnect delivery of the commodity to at least a portion of the commodity distribution infrastructure downstream of the commodity meter.
20. The computing device of any of clauses 17-19, wherein the computing device is located in the commodity meter.Any and all combinations of any of the claim elements recited in any of the claims and/or any elements described in this application, in any fashion, fall within the contemplated scope of the present protection.

The descriptions of the various embodiments have been presented for purposes of illustration, but are not intended to be exhaustive or limited to the embodiments disclosed. Many modifications and variations will be apparent to those of ordinary skill in the art without departing from the scope of the appended claims.

Aspects of the present embodiments can be embodied as a system, method or computer program product. Accordingly, aspects of the present disclosure can take the form of an entirely hardware embodiment, an entirely software embodiment (including firmware, resident software, micro-code, etc.) or an embodiment combining software and hardware aspects that can all generally be referred to herein as a "module," a "system," or a "computer." In addition, any hardware and/or software technique, process, function, component, engine, module, or system described in the present disclosure can be implemented as a circuit or set of circuits. Furthermore, aspects of the present disclosure can take the form of a computer program product embodied in one or more computer readable medium(s) having computer readable program code embodied thereon.

Any combination of one or more computer readable medium(s) can be utilized. The computer readable medium can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium can be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions can be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors can be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams can represent a module, segment, or portion of code, which comprises one or more executable instructions for implementing the specified logical function(s). It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure can be devised without departing from the basic scope thereof, and the scope thereof is determined by the claims that follow. Moreover, in the above description, numerous specific details are set forth to provide a more thorough understanding of the various embodiments. However, it will be apparent to one of skill in the art that the inventive concepts may be practiced without one or more of these specific details.

## Claims

1. A method comprising:
detecting, by a computing device, an event occurring at a location proximate a metering device, the event corresponding to an earthquake or a severe weather event;
receiving, by the computing device, first consumption data for a commodity, the first consumption data being collected by the metering device after the event;
comparing the first consumption data with second consumption data for the commodity, the second consumption data being collected by the metering device before the event; and
in response to the comparing, performing, by the computing device, a remedial action.

2. The method of claim 1, wherein the commodity is water, gas, heat, or electricity.

3. The method of claim 1 or claim 2, wherein the metering device is within a threshold distance of the location.

4. The method of any preceding claim, wherein detecting the event comprises receiving event information from at least one of United States Geological Survey Earthquake Hazards Program API or National Weather Service API.

5. The method of any preceding claim, wherein detecting the event comprises analyzing tilt or accelerometer data from one or more sensors in the metering device.

6. The method of any preceding claim, wherein the remedial action comprises at least one of scheduling an onsite inspection or transmitting a notification to a back office server, a utility provider, or a property owner associated with the metering device.

7. The method according to any of claims 1 to 5, wherein the remedial action comprises commanding the metering device or a separate shut-off device to shut off flow of the commodity.

8. The method of any preceding claim, wherein comparing the first consumption data with the second consumption data comprises determining whether a first flow rate associated with the first consumption data is more than a threshold above a second flow rate associated with the second consumption data.

9. The method according to any of claims 1 to 7, wherein comparing the first consumption data with the second consumption data comprises determining that a consumption pattern in the first consumption data differs from a time of use profile determined from the second consumption data.

10. The method according to any of claims 1 to 7, wherein comparing the first consumption data with the second consumption data comprises comparing the first consumption data with disaggregated usage patterns determined from the second consumption data.

11. The method of any preceding claim, further comprising commanding, by the computing device in response to detecting the event, the metering device to increase a sampling rate for the first consumption data.

12. The method according to any of claims 1 to 7, wherein comparing the first consumption data with the second consumption data comprises:
determining that a flow rate of the commodity determined from the first consumption data exceeds a flow rate determined from the second consumption data;
determining that a pattern of commodity consumption determined from the first consumption data differs from a pattern of commodity consumption determined from the second consumption data; or
determining that the pattern of commodity consumption from the first consumption data differs from a pattern of disaggregated consumption determined from the second consumption data.

13. One or more non-transitory computer-readable media storing instructions which, when executed by one or more processors, cause the one or more processors to perform the method of any one of claims 1 to 12.

14. A computing device comprising:
one or more processors; and
a memory storing executable instructions which, when executed by the one or more processors, cause the one or more processors to perform the method of any one of claim 1 to 12.

15. The computing device of claim 14, wherein the computing device is located in a commodity meter.
